# EUROPÄISCHE PATENTSCHRIFT

(11) **EP 0 992 701 B1**
(45) Veröffentlichungstag und Bekanntmachung des Hinweises auf die Patenterteilung: **10.05.2006**
(21) Anmeldenummer: 99116896.4
(22) Anmeldetag: 07.09.1999
(51) Int. Cl.: F16D 65/27, F16D 51/48

(54) **Trommelbremse für ein Kraftfahrzeug**
Drum brake for a motor vehicle
Frein à tambour pour automobile

(30) Priorität: 08.10.1998 DE 19846420
(43) Veröffentlichungstag der Anmeldung: 12.04.2000
(73) Patentinhaber: Volkswagen Aktiengesellschaft, 38436 Wolfsburg (DE)
(72) Erfinder: Sintram, Ulf, 38547 Calberlah (DE)

(56) Entgegenhaltungen:
- DE-A- 3 831 297
- DE-C- 841 695
- FR-A- 1 364 956
- US-A- 3 469 660
- US-A- 5 590 747
- PATENT ABSTRACTS OF JAPAN vol. 018, no. 283 (M-1613), 30. Mai 1994 (1994-05-30) & JP 06 050363 A (HONDA MOTOR CO LTD), 22. Februar 1994 (1994-02-22)

## Beschreibung

Die Erfindung betrifft eine Trommelbremse mit den Merkmalen des Oberbegriffs von Patentanspruch 1.

Trommelbremsen werden beispielsweise als Simplexbremsen oder Duo-Servo-Bremsen ausgeführt.

Bei einer als Simplexbremse ausgeführtem Trommelbremse kommt es in Abhängigkeit der Drehrichtung zu unterschiedlicher Belagabnützung an den beiden Reibflächen der Bremsbacken. Dies liegt daran, daß eine als Simplexbremse ausgeführte Trommelbremse eine auflaufende und eine ablaufende Bremsbacke aufweist.

Bei den im Stand der Technik als Duo-Servo-Bremsen ausgeführten Trommelbremsen ist ein gleichmäßigerer Verschleiß der Reibflächen der Bremsbacken gewährleistet, da eine als Duo-Servo-Bremse ausgeführte Trommelbremse zwei auflaufende Bremsbacken aufweist.

Bei dem normalen Fahr-Bremsbetrieb, bei dem die unteren Enden der Bremsbacken der entsprechenden Trommelbremse gegenüber einem festen Stützlager abstützend gelagert sind, muß eine Trommelbremse auch eine Feststellbremseinrichtung aufweisen, mit deren Hilfe ein Parken des Kraftfahrzeugs ermöglicht ist (Handbremsbetrieb). Anders ausgedrückt, eine Trommelbremse weist auch zwei voneinander unabhängige Bremseinrichtungen auf, wobei die erste den Fahr-Bremsbetrieb gewährleistet und die zweite, nämlich die Feststellbremseinrichtung, ein sicheres Abstellen (Parken) des Kraftfahrzeugs ermöglicht.

Bei im Stand der Technik bekannten Trommelbremsen ist diese Feststellbremseinrichtung zumeist im oberen Bereich der Bremsbacken immer genau gegenüber dem festen Stützlager angeordnet. Hierbei ist nachteilig, daß die Anordnung der Feststellbremseinrichtungen in diesem Bereich äußerst kompliziert ist, da der für die Feststellbremseinrichtung notwendige Raumbedarf nicht optimal zur Verfügung steht, weil sich im oberen Bereich der Bremsbacken andere wesentliche Elemente der Trommelbremse, wie Druckstange, Bremskraftzylinder oder dergleichen befinden. So existieren im Stand der Technik Feststellbremseinrichtungen, die im oberen Bereich vorgesehen sind und einen entsprechend dimensionierten Betätigungsnocken aufweisen, wodurch einerseits - im Gegensatz zu anderen Lösungsmöglichkeiten - Raumbedarf eingespart werden kann, da ein derartiger Betätigungsnocken mit relativ geringen Dimensionierungen auch bei einem nur gering zur Verfügung stehenden Raum angeordnet werden kann. Andererseits ist allen im Stand der Technik bekannten Feststellbremseinrichtungen gemeinsam, daß deren Anordnung, Montage sowie Wartung sehr arbeitsaufwendig ist, da der zur Verfügung stehende Raum im oberen Bereich der Bremsbacken äußerst begrenzt ist.

Eine Trommelbremse, die die Merkmale des Oberbegriffs von Patentanspruch 1 aufweist, ist aus der US 6,590,747 bekannt. Bei dieser ist die Betätigungseinrichtung der Feststellbremse im Bereich des Stützlagers der Bremsbacken angeordnet. Die bekannte Bremse verwendet einen Hebelmechanismus. Dabei greift jeweils ein Hebel an einer Bremsbacke an. Diese beiden Hebel sind über einen weiteren Hebel so miteinander verbunden, dass durch Betätigung des weiteren Hebels die Bremsbacken auseinandergedrückt werden. Ein Gleitbogen sorgt dafür, dass sich beide Bremsbacken gleichmäßig an die Bremstrommel anlegen können. Die Betätigung des weiteren Hebels erfolgt hierzu über einen Seilzug.

Eine weitere Trommelbremse, bei der ein Mechanismus zum Spreizen der Bremsbacken in ein Stützlager integriert ist, ist aus der DE 841 695 A bekannt.

Der Erfindung liegt die Aufgabe zugrunde, eine Trommelbremse bereitzustellen, die eine unabhängige Feststellbremsfunktion in robuster, raumsparender und drehantriebsgeeigneter Art und Weise ermöglicht.

Diese Aufgabe wird durch eine Trommelbremse nach Patentanspruch 1 gelöste. Vorteilhafte Ausgestaltungen sind in den weiteren Patentansprüchen angegeben.

Die Feststellbremseinrichtung ist im Bereich des Stützlagers angeordnet und so ausgebildet, daß - beim Feststell-Bremsvorgang - die Abstützung der unteren Enden der Bremsbacken auf dem Stützlager aufhebbar ist und durch die damit verbundene Bewegung der unteren Enden der Bremsbacken die Reibflächen der Bremsbacken mit der Bremstrommel in Kontakt bringbar sind. Im Gegensatz zum Stand der Technik ist die Feststellbremseinrichtung nun örtlich nicht mehr gegenüber dem Stützlager, also nicht mehr im oberen Bereich der Bremsbacken angeordnet, sondern im Bereich des Stützlagers selbst. Auch aktiviert die Feststellbremseinrichtung wie im Stand der Technik den entsprechenden Bremsvorgang nunmehr nicht mehr dadurch, daß die Bremsbacken im oberen Bereich auseinandergespreizt werden, sondern nunmehr ganz im Gegenteil die unteren Enden der Bremsbacken auseinandergespreizt werden, die sonst am Stützlager anliegen. Folglich wird die Abstützung der unteren Enden der Bremsbacken auf dem Stützlager hierzu aufgehoben, wobei durch die damit verbundene Bewegung der unteren Enden der Bremsbacken die Reibflächen der Bremsbacken mit der Bremstrommel in Kontakt bringbar sind, da die unteren Enden der Bremsbacken auseinandergespreizt werden. Der im unteren Bereich der Bremsbacken, nämlich im Bereich des Stützlagers zur Verfügung stehende Raum zur Anordnung der Feststellbremseinrichtung ist - abgesehen von der Begrenzung des Stützlagers selbst - relativ groß. Folglich ist die Anordnung, die Montage und Wartung der Feststellbremseinrichtung, d.h. der hierzu erforderliche Arbeitsaufwand wesentlich verringert. Der Erfindung liegt praktisch der Grundgedanke zugrunde, eine Trommelbremse zu schaffen, die im normalen Fahr-Bremsbetrieb als Simplex-Bremse und im Feststell-Bremsbetrieb (Handbremsbetrieb) als Duo-Servo-Bremse ausgeführt ist.

Im einzelnen werden nun zwei bevorzugte Ausführungsbeispiele für die erfindungsgemäße Trommelbremse anhand der folgenden Zeichnung und Beschreibung näher beschrieben. Die Zeichnung zeigt
Fig. 1 eine erste Ausführungsform einer erfindungsgemäßen Trommelbremse in einer schematischen perspektivischen Darstellung,
Fig. 2 die in Fig. 1 dargestellte Trommelbremse im Schnitt in einer schematischen Darstellung;
Fig. 3 die Trommelbremse aus Fig. 1 in einer schematischen Darstellung von der Seite;
Fig. 4 wesentliche Bestandteile der Feststellbremseinrichtung in einer schematischen Explosionsdarstellung
Fig. 5 die Trommelbremse aus Fig. 1 in einer perspektivischen schematischen Darstellung von hinten;
Fig. 6 die Trommelbremse aus Fig. 1 in einer schematischen teilweise geschnittenen Darstellung von oben mit unbetätigter Feststellbremseinrichtung;
Fig. 7 die Trommelbremse aus Fig. 6 mit einer betätigten Feststellbremseinrichtung;
Fig. 8 eine zweite Ausführungsform für eine Feststellbremseinrichtung in einer teilweise schematischen Darstellung von der Seite bei unbetätigter Feststellbremseinrichtung; und
Fig. 9 die Darstellung aus Fig. 8 bei betätigter Feststellbremseinrichtung.

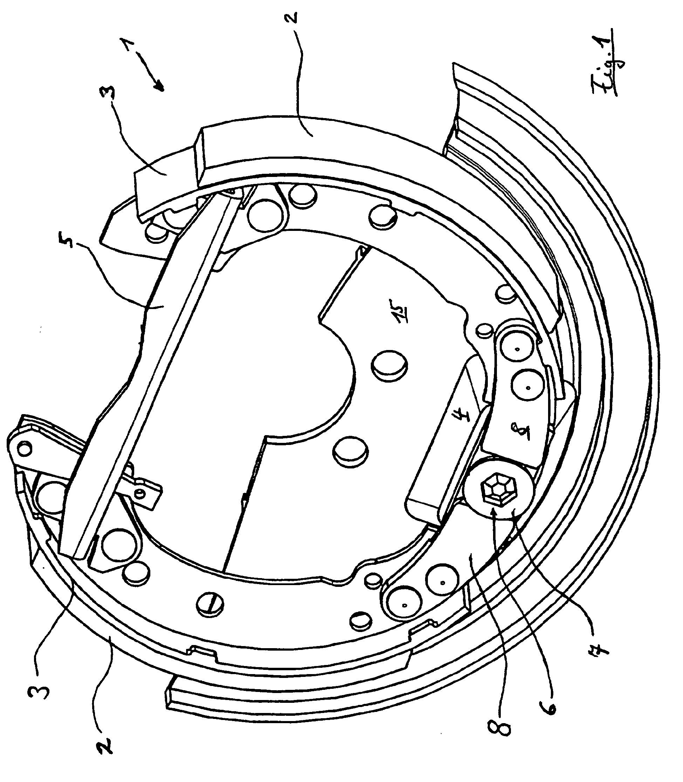

Die Fig. 1 bis 3 und 5 bis 7 zeigen in schematischer Darstellung eine Trommelbremse 1 für ein nicht dargestelltes Kraftfahrzeug. Die Trommelbremse 1 weist eine Bremstrommel und zwei jeweils eine Reibfläche 2 aufweisende Bremsbacken 3 auf. Die unteren Enden 3b der Bremsbacken 3 sind im normalen Fahr-Bremsbetrieb gegenüber einem festen Stützlager 4 abstützend gelagert. Im oberen Bereich sind die Bremsbacken 3 durch eine Druckstange 5 miteinander verbunden. Um nun im Gegensatz zum normalen Fahr-Bremsbetrieb, bei dem der Bremsvorgang über einen nicht dargestellten Druckzylinder realisiert wird, auch ein sicheres Abstellen, d.h. Parken des Kraftfahrzeugs 1 im "Handbremsbetrieb" zu gewährleisten, ist eine entsprechende Feststellbremseinrichtung 6 vorgesehen. Die hier gezeigte Feststellbremseinrichtung 6 gewährleistet also ein Parken, d.h. sicheres Abstellen des Kraftfahrzeugs bei dem entsprechend dann zu realisierenden Festell-Bremsvorgang und ist - völlig unabhängig vom Radbremszylinder, d.h. dem normalen Fahr-Bremsbetrieb - betätigbar.

Die eingangs beschriebenen Nachteile werden nun dadurch vermieden, daß die Festellbremseinrichtung 6 im Bereich des Stützlagers 4 angeordnet und so ausgebildet ist, daß - beim Feststell-Bremsvorgang - die Abstützung der unteren Enden 3b der Bremsbacken 3 auf dem Stützlager 4 aufhebbar ist und durch die damit verbundene Bewegung der unteren Enden 3b der Bremsbacken 3 die Reibflächen 2 der Bremsbacken 3 mit der Bremstrommel in Kontakt bringbar sind. Die Fig. 1, 2, 3, 5 bis 7 zeigen in schematischer Darstellung die Trommelbremse 1 mit der hier realisierten Feststellbremseinrichtung 6, deren Funktionsweise im folgenden noch näher erläutert werden wird.

Es sei erwähnt, daß durch die Druckstange 5 - beim Feststell-Bremsvorgang - eine schwimmende Lagerung der Bremsbacken 3 realisiert ist. Dies bedeutet, daß dadurch, daß die unteren Enden 3b der Bremsbacken 3 durch die Feststellbremseinrichtung 6 entsprechend auseinandergedrückt werden, daß die Trommelbremse im Feststell-Bremsbetrieb als "Duo-Servo-Bremse" funktioniert. Dies hat den Vorteil, daß praktisch im Feststell-Bremsbetrieb zwei auflaufende Bremsbacken 3 realisierbar sind, was die eingangs beschriebenen Vorteile mit sich bringt bzw. die eingangs beschriebenen Nachteile vermeidet. Die hier dargestellte Trommelbremse 1 realisiert also den Grundgedanken der Erfindung, nämlich einen normalen Fahr-Bremsbetrieb gemäß einer Simplex-Bremse und einen Feststell-Bremsbetrieb gemäß einer Duo-Servo-Bremse.

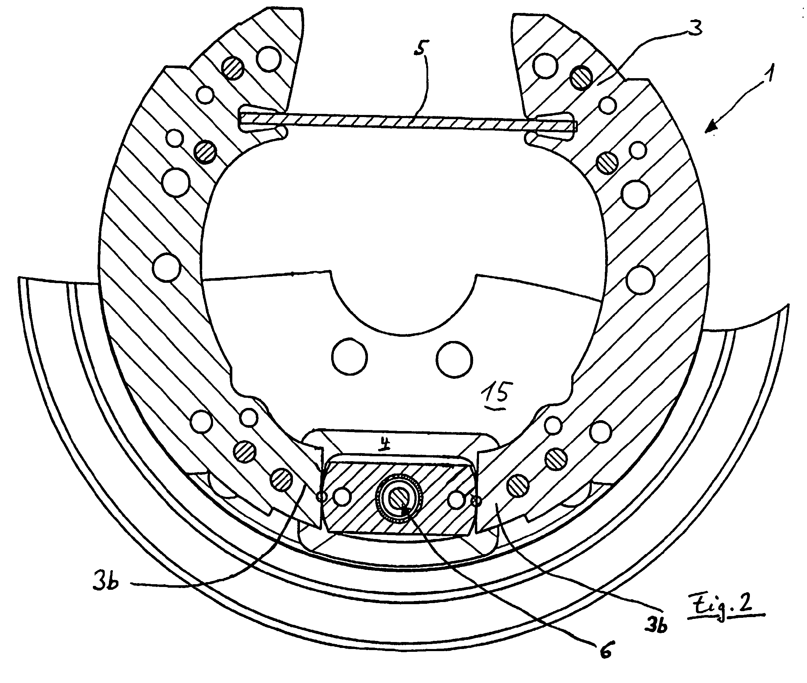

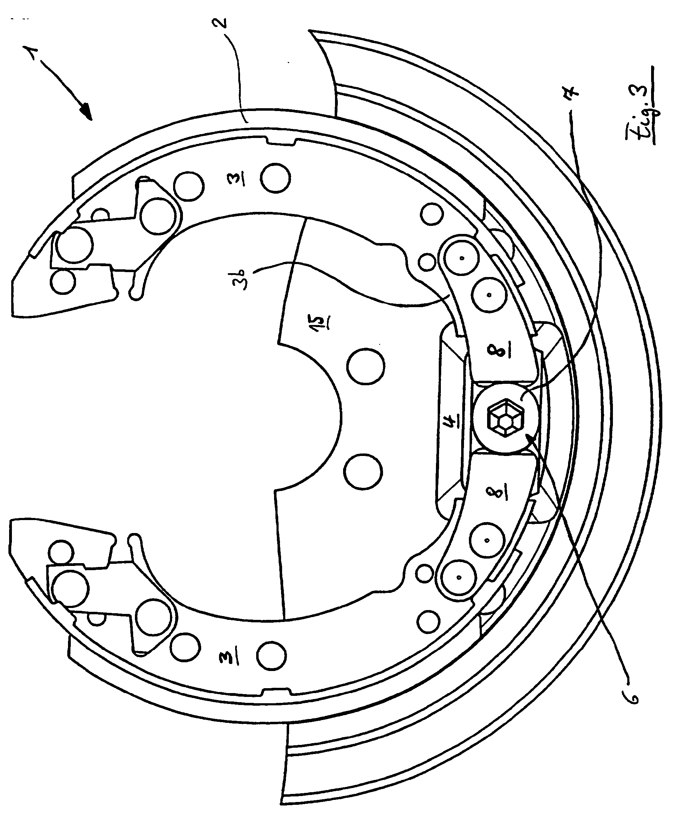

Wie insbesondere die Fig. 2 zeigt, ist das Stützlager 4 als eine Art Hohlprofil ausgebildet, wobei wesentliche Bestandteile der Feststellbremseinrichtung 6 innerhalb des Stützlagers 4 angeordnet sind, was aus Fig. 1 und 3 erkennbar ist.

Die Feststellbremseinrichtung 6 weist einen Betätigungsnocken 7 auf. Zusätzlich sind zwei Hebelelemente 8 vorgesehen, wobei ein Ende jedes Hebelelements 8 mit dem unteren Bereich einer Bremsbacke 3 angelenkt ist und das andere Ende jedes Hebelelements 8 an dem Betätigungsnocken 7, d.h. an der entsprechenden Außenfläche des Betätigungsnockens 7 anliegt, was die Fig. 3 gut erkennen läßt.

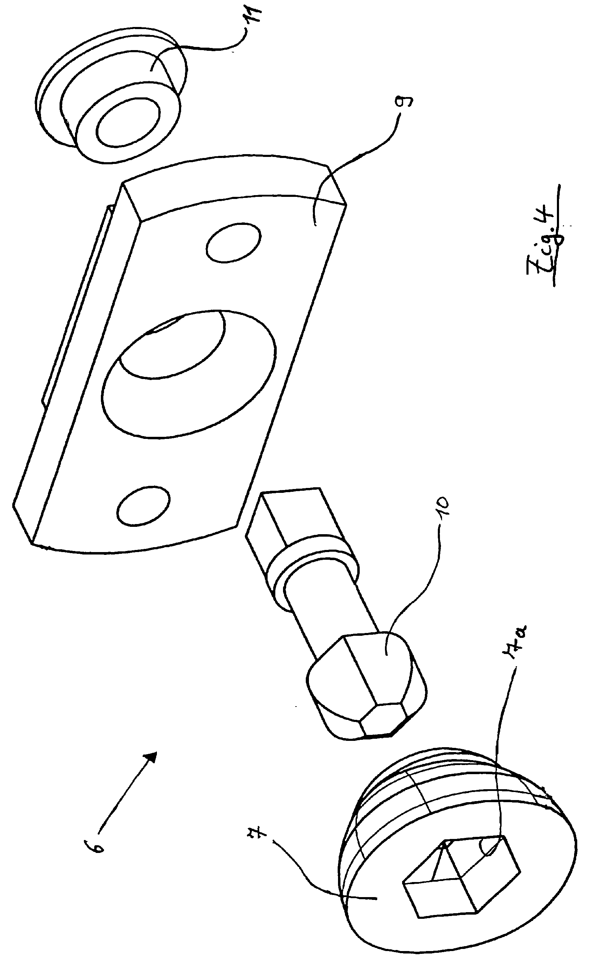

Der Betätigungsnocken 7 ist nun drehbar gelagert. Fig. 4 zeigt eine Explosionsdarstellung der wesentlichen Bestandteile der Feststellbremseinrichtung 6. Gut zu erkennen ist der taumelnd gelagerte Betätigungsnocken 7, der mit Hilfe eines Abstützelements 9 und eines Mehrkant-Kugelkopfes 10, insbesondere eines Sechskant-Kugelkopfes und einer Buchse 11 drehbar gelagert ist. Der Betätigungsnocken 7 weist für den Mehrkant-Kugelkopf 10 eine entsprechende Ausnehmung 7a auf, so daß eine taumelnde Bewegung des Betätigungsnockens 7 während dessen Betätigung gewährleistet ist. Aufgrund der "taumelnden Lagerung" des Betätigungsnockens 7 muß dieser lediglich die einleitende Kraft aufbringen und nicht gegen die Abstützkraft "ankämpfen".

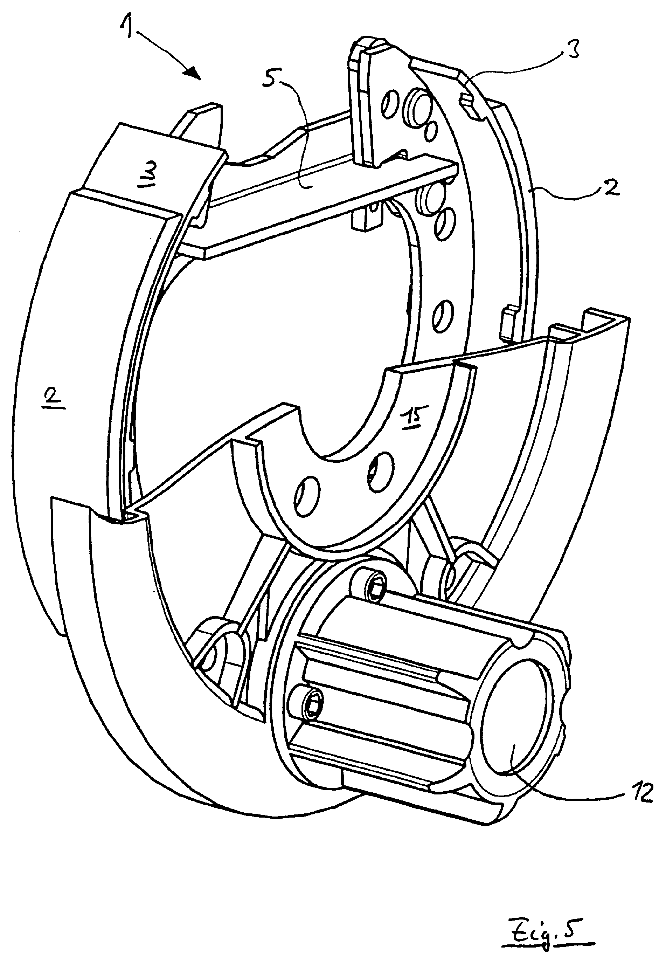

Fig. 5 läßt erkennen, daß zur Betätigung des Betätigungsnockens 7 ein Elektromotor 12 vorgesehen ist. Zwischen Elektromotor 12 und Betätigungsnocken 7 ist ein nicht dargestelltes Planetengetriebe wirksam angeordnet, wobei das Planetengetriebe hier als integraler Bestandteil des Elektromotors 12 ausgebildet ist. Folglich wird die hier dargestellte Feststellbremseinrichtung elektrisch betätigt.

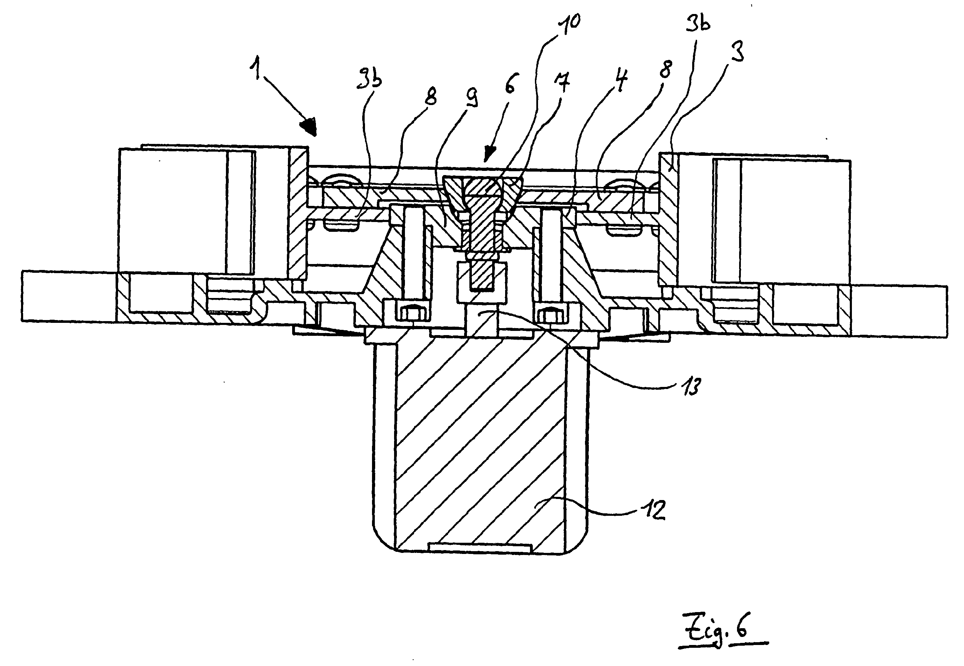

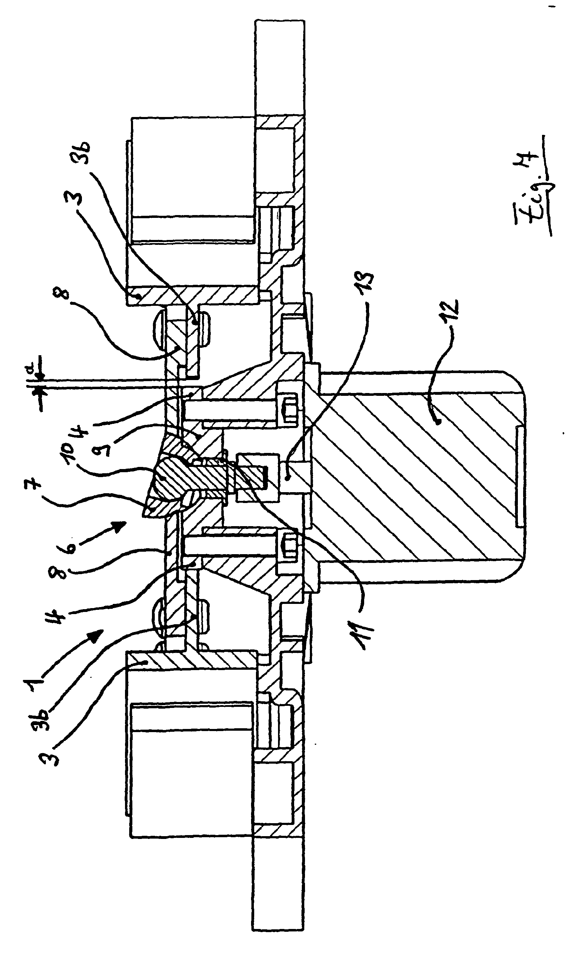

Wie die Fig. 6 und 7 erkennen lassen, ist der Betätigungsnocken 7 von einer Antriebswelle 13 antreibbar, die wiederum von dem Elektromotor 12 angetrieben wird.

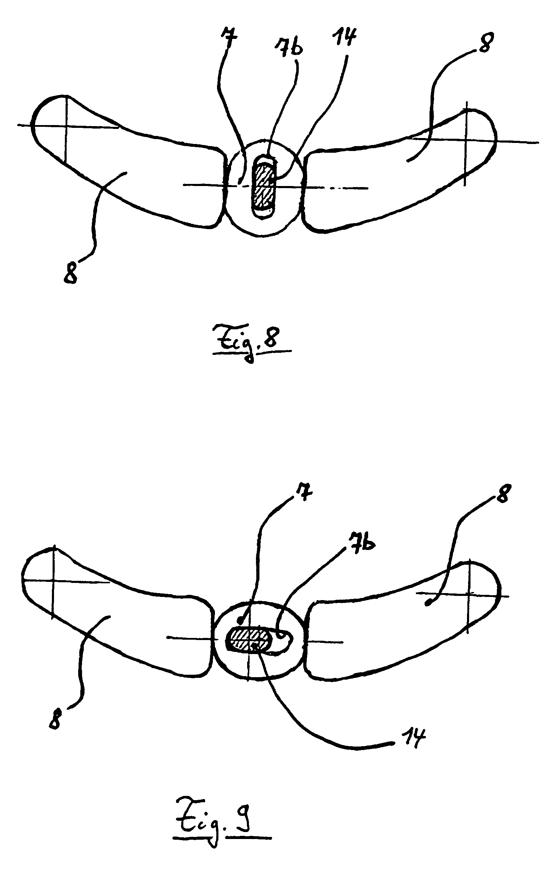

Die Fig. 4, 6 und 7 zeigen eine erste Antriebsmöglichkeit für den Betätigungsnocken 7. Schematisch zeigen die Fig. 8 und 9 eine zweite Betätigungsmöglichkeit für den Betätigungsnocken 7 in schematischer Darstellung. Hierbei weist der Betätigungsnocken 7 eine Nut 7b und die nicht dargestellte Antriebswelle einen in die Nut 7b eingreifenden Fortsatz 14 auf. Durch die Nut 7b des Betätigungsnockens 7 und den Fortsatz 14 ist eine schwimmende Lagerung des Betätigungsnockens 7 realisiert, was aus den Fig. 8 und 9 gut zu erkennen ist.

Zur Betätigung der Feststellbremseinrichtung 6 ist der Betätigungsnocken 7 vzw. um 90° drehbar. Der Betätigungsnocken 7 weist entsprechend ausgebildete Anlageflächen bzw. eine entsprechend ausgebildete Anlagefläche auf, so daß eine Bewegung der Hebelarme 8 realisierbar und über die Hebelarme 8 die Abstützung der unteren Enden 3b der Bremsbacken 3 auf dem Stützlager 4 aufhebbar ist. Anders ausgedrückt, die unteren Enden 3b der Bremsbacken 3 werden mit Hilfe der Feststellbremseinrichtung 6 auseinandergespreizt. Dieser Vorgang soll hier noch einmal kurz näher erläutert werden.

Fig. 2 zeigt, daß die unteren Enden 3b der Bremsbacken 3 am Stützlager 4 entsprechend anliegen. Fig. 2 zeigt also die Trommelbremse 1 bei unbetätigter Feststellbremseinrichtung. Ebenso zeigt die Fig. 1 die Trommelbremse 1 bei unbetätigter Feststellbremseinrichtung 6. Die Darstellung gemäß der Fig. 6 läßt gut erkennen, daß hier die unteren Enden 3b der Bremsbacken 3 noch am Stützlager 4 anliegen, also auch hier die Feststellbremseinrichtung 6 noch nicht betätigt worden ist.

Wenn nun die Feststellbremseinrichtung 6 betätigt wird, insbesondere mit Hilfe des in Fig. 5 dargestellten Elektromotors 12, der wie das Stützlager 4 auf einer entsprechenden Platte 15 angeordnet ist, so kommt es zu einer Drehung des Betätigungsnockens 7. Hierbei werden die unteren Enden 3b der Bremsbacken 3 voneinander weg bewegt, nämlich über die Hebelelemente 8, die die entsprechende Bewegung über die Anlagefläche des Betätigungsnockens 7 auf die unteren Enden 3b der Bremsbacken 3 übertragen. So zeigen Fig. 3 und Fig. 7 eine betätigte Feststellbremseinrichtung 6. Gut zu erkennen ist in Fig. 7 der zwischen Stützlager 4 und unterem Ende 3b der Bremsbacken 3 bereits durch die entsprechende Bewegung des Hebelelementes 8 hervorgerufene Spalt a (vgl. rechte Seite der Fig. 7).

Entscheidend ist, daß hier die Feststellbremseinrichtung 6 im Bereich des Stützlagers 4 angeordnet ist und über entsprechende Elemente, hier ein Betätigungsnocken 7, der drehbar angeordnet ist, die unteren Enden 3b der Bremsbacken 3 auseinandergespreizt werden. Die hierfür zwischen dem Betätigungsnocken 7 und den Bremsbacken 3 wirksam angeordneten Hebelelemente 8 sind mit einem Ende mit der jeweiligen Bremsbacke 3 wirksam verbunden und liegen mit dem anderen Ende an der Anlagefläche des Betätigungsnockens 7 an. Über die entsprechend dimensionierte Anlagefläche des Betätigungsnockens 7 und dessen Drehung ist die entsprechende Bewegung dann realisierbar.

## Patentansprüche

1. Trommelbremse (1) für ein Kraftfahrzeug, mit einer Bremstrommel und mit zwei jeweils eine Reibfläche (2) aufweisenden Bremsbacken (3), wobei die unteren Enden der Bremsbacken (3) - im normalen Fahr-Bremsbetrieb - gegenüber einem festen Stützlager (4) abstützend gelagert sind und die Bremsbacken (3) im oberen Bereich durch eine Druckstange (5) miteinander verbunden sind und wobei eine Feststellbremseinrichtung (6) vorgesehen ist, die im Bereich des Stützlagers (4) angeordnet und so ausgebildet ist, daß - beim Feststell-Bremsvorgang - die Abstützung der unteren Enden (3b) der Bremsbacken (3) auf dem Stützlager (4) aufhebbar ist und durch die damit verbundene Bewegung der unteren Enden (3b) der Bremsbacken (3) die Reibflächen (2) der Bremsbacken (3) mit der Bremstrommel in Kontakt bringbar sind, wobei die Feststellbremseinrichtung (6) zwei Hebelelemente (8) aufweist, die mit einem Ende jeweils an einem unteren Bereich einer Bremsbacke (3) angelenkt sind,
**dadurch gekennzeichnet, daß**
die Hebelelemente (8) jeweils mit einem anderen Ende an einem drehbaren Betätigungsnocken (7) anliegen, der bei einem Feststell-Bremsvorgang in dem Stützlager (4) unter Drehung eine Taumelbewegung oder Exzenterbewegung ausführt, durch die die unteren Enden (3b) der Bremsbacken (3) über die Hebelelemente (8) voneinander weg bewegbar sind.

2. Trommelbremse nach dem vorhergehenden Anspruch, **dadurch gekennzeichnet, daß** durch die Druckstange (5) - beim Feststell-Bremsvorgang - eine schwimmende Lagerung der Bremsbacken (3) realisiert ist.

3. Trommelbremse nach einem der vorhergehenden Ansprüche, **dadurch gekennzeichnet, daß** das Stützlager (4) als eine Art Hohlprofil ausgebildet ist und wesentliche Bestandteile der Feststellbremseinrichtung (6) innerhalb des Stützlagers (4) angeordnet sind.

4. Trommelbremse nach einem der vorhergehenden Ansprüche, **dadurch gekennzeichnet, daß** der Betätigungsnocken (7) drehbar gelagert ist.

5. Trommelbremse nach einem der vorhergehenden Ansprüche, **dadurch gekennzeichnet, daß** der Betätigungsnocken (7) mit Hilfe eines Abstützelementes (9), eines Mehrkant-Kugelkopfes (10) und einer Buchse (11) drehbar gelagert ist.

6. Trommelbremse nach Anspruch 5, **dadurch gekennzeichnet, daß** der Betätigungsnocken (7) eine für den Mehrkant-Kugelkopf (10) entsprechende Ausnehmung (7a) aufweist, so daß eine taumelnde Bewegung des Betätigungsnockens (7) während dessen Betätigung gewährleistet ist.

7. Trommelbremse nach einem der Ansprüche 1 bis 4, **dadurch gekennzeichnet, daß** der Betätigungsnocken (7) eine Nut (7b) und die Antriebswelle (13) einen in die Nut (7b) eingreifenden Fortsatz (14) aufweist.

8. Trommelbremse nach Anspruch 7, **dadurch gekennzeichnet, daß** durch die Nut (7b) und den Fortsatz (14) eine schwimmende Lagerung des Betätigungsnockens (7) realisiert ist.

9. Trommelbremse nach Anspruch 7 oder 8, **dadurch gekennzeichnet, daß** zur Betätigung der Feststellbremseinrichtung (6) der Betätigungsnocken (7) um 90° drehbar ist.

10. Trommelbremse nach einem der vorhergehenden Ansprüche, **dadurch gekennzeichnet, daß** zur Betätigung des Betätigungsnockens (7) ein Elektromotor (12) vorgesehen ist.

11. Trommelbremse nach Anspruch 10, **dadurch gekennzeichnet, daß** zwischen Elektromotor (12) und Betätigungsnocken (7) ein Planetengetriebe wirksam angeordnet ist.

12. Trommelbremse nach einem der vorhergehenden Ansprüche, **dadurch gekennzeichnet, daß** der Betätigungsnocken (7) von einer Antriebswelle (13) antreibbar ist.

13. Trommelbremse nachAnspruch 12, **dadurch gekennzeichnet, daß** die Antriebswelle (13) von dem Elektromotor (12) antreibbar ist.

## Claims

1. Drum brake (1) for a motor vehicle, having a brake drum and having, two brake shoes (3) which each have a friction face (2), the lower ends of the brake shoes (3), in the normal driving brake mode, being mounted in a supportive manner with respect to a fixed supporting bearing (4) and the brake shoes (3) being connected to one another in the upper region by a thrust rod (5), and a parking brake device (6) being provided which is arranged in the region of the supporting bearing (4) and is configured in such a way that, during the parking brake operation, the support of the lower ends (3b) of the brake shoes (3) on the supporting bearing (4) can be cancelled and the friction faces (2) of the brake shoes (3) can be brought into contact with the brake drum by the associated movement of the lower ends (3b) of the brake shoes (3), the parking brake device (6) having two lever elements (8) which are articulated with one end in each case at a lower region of a brake shoe (3), **characterized in that** the lever elements (8) in each case bear with another end against a rotatable actuating cam (7) which, in the event of a parking brake operation, performs a tumbling movement or eccentric movement including rotation in the supporting bearing (4), by means of which movement the lower ends (3b) of the brake shoes (3) can be moved away from one another via the lever elements (8).

2. Drum brake according to the preceding claim, **characterized in that** floating mounting of the brake shoes (3) is realized by the thrust rod (5), during the parking brake operation.

3. Drum brake according to one of the preceding claims, **characterized in that** the supporting bearing (4) is configured as a type of hollow profile and essential constituent parts of the parking brake device (6) are arranged within the supporting bearing (4).

4. Drum brake according to one of the preceding claims, **characterized in that** the actuating cam (7) is mounted rotatably.

5. Drum brake according to one of the preceding claims, **characterized in that** the actuating cam (7) is mounted rotatably with the aid of a supporting element (9), a polygonal ball head (10) and a bush (11).

6. Drum brake according to Claim 5, **characterized in that** the actuating cam (7) has a recess (7a) which corresponds to the polygonal ball head (10), with the result that a tumbling movement of the actuating cam (7) is ensured during its actuation.

7. Drum brake according to one of Claims 1 to 4, **characterized in that** the actuating cam (7) has a groove (7b) and the drive shaft (13) has a projection (14) which engages into the groove (7b).

8. Drum brake according to Claim 7, **characterized in that** floating mounting of the actuating cam (7) is realized by the groove (7b) and the projection (14).

9. Drum brake according to Claim 7 or 8, **characterized in that** the actuating cam (7) can be rotated by 90° in order to actuate the parking brake device (6).

10. Drum brake according to one of the preceding claims, **characterized in that** an electric motor (12) is provided in order to actuate the actuating cam (7).

11. Drum brake according to Claim 10, **characterized in that** a planetary gear mechanism is arranged actively between the electric motor (12) and the actuating cam (7).

12. Drum brake according to one of the preceding claims, **characterized in that** the actuating cam (7) can be driven by a drive shaft (13).

13. Drum brake according to Claim 12, **characterized in that** the drive shaft (13) can be driven by the electric motor (12).

## Revendications

1. Frein à tambour (1) pour automobile, comprenant un tambour de frein et deux mâchoires de frein (3) présentant chacune une surface de frottement (2), les extrémités inférieures des mâchoires de frein (3) - en mode de freinage normal - étant montées de manière supportée par rapport à un palier d'appui (4) fixe et les mâchoires de frein (3) étant connectées l'une à l'autre dans la partie supérieure par une tige de compression (5) et un dispositif de frein de stationnement (6) étant prévu, lequel est disposé dans la région du palier d'appui (4) et est réalisé de telle sorte que lors d'une opération de freinage de stationnement, le support des extrémités inférieures (3b) des mâchoires de frein (3) sur le palier d'appui (4) puisse être supprimé et de telle sorte que du fait du mouvement associé des extrémités inférieures (3b) des mâchoires de frein (3), les surfaces de frottement (2) des mâchoires de frein (3) puissent être amenées en contact avec le tambour de frein, le dispositif de frein de stationnement (6) présentant deux éléments de levier (8) qui sont articulés à une extrémité à chaque fois à une partie inférieure d'une mâchoire de frein (3),
**caractérisé en ce que**
les éléments de levier (8) s'appliquent à chaque fois avec une autre extrémité contre une came d'actionnement (7) rotative qui exerce dans le palier d'appui (4) par rotation un mouvement de nutation ou un mouvement excentré lors d'une opération de freinage de stationnement, par lequel les extrémités inférieures (3b) des mâchoires de frein (3) peuvent être écartées l'une de l'autre par le biais des éléments de levier (8).

2. Frein à tambour selon la revendication précédente, **caractérisé en ce qu'**un support flottant des mâchoires de frein (3) est réalisé par la tige de compression (5) - dans le cas d'une opération de freinage de stationnement.

3. Frein à tambour selon l'une quelconque des revendications précédentes, **caractérisé en ce que** le palier d'appui (4) est réalisé sous la forme d'un profilé creux et les constituants essentiels du dispositif de frein de stationnement (6) sont disposés à l'intérieur du palier d'appui (4).

4. Frein à tambour selon l'une quelconque des revendications précédentes, **caractérisé en ce que** la came d'actionnement (7) est montée à rotation.

5. Frein à tambour selon l'une quelconque des revendications précédentes, **caractérisé en ce que** la came d'actionnement (7) est montée à rotation au moyen d'un élément d'appui (9), d'une tête sphérique polygonale (10) et d'une douille (11).

6. Frein à tambour selon la revendication 5, **caractérisé en ce que** la came d'actionnement (7) présente un évidement correspondant (7a) pour la tête sphérique polygonale (10) de sorte qu'un mouvement de nutation de la came d'actionnement (7) soit assuré pendant son actionnement.

7. Frein à tambour selon l'une quelconque des revendications 1 à 4, **caractérisé en ce que** la came d'actionnement (7) présente une rainure (7b) et l'arbre d'entraînement (13) présente une saillie (14) venant en prise dans la rainure (7b).

8. Frein à tambour selon la revendication la revendication 7, **caractérisé en ce que** la rainure (7b) et la saillie (14) constituent un palier flottant de la came d'actionnement (7).

9. Frein à tambour selon la revendication 7 ou 8, **caractérisé en ce que** pour l'actionnement du dispositif de frein de stationnement (6), la came d'actionnement (7) peut être tournée de 90°.

10. Frein à tambour selon l'une quelconque des revendications précédentes, **caractérisé en ce que** pour l'actionnement de la came d'actionnement (7), on prévoit un moteur électrique (12).

11. Frein à tambour selon la revendication 10, **caractérisé en ce que** l'on dispose activement entre le moteur électrique (12) et la came d'actionnement (7) un engrenage planétaire.

12. Frein à tambour selon l'une quelconque des revendications précédentes, **caractérisé en ce que** la came d'actionnement (7) peut être entraînée par un arbre d'entraînement (13).

13. Frein à tambour selon la revendication 12, **caractérisé en ce que** l'arbre d'entraînement (13) peut être entraîné par le moteur électrique (12).
